# EUROPEAN PATENT APPLICATION

(11) **EP 2 533 490 A1**
(43) Date of publication of application: **12.12.2012**
(21) Application number: 12161597.5
(22) Date of filing: 27.03.2012
(51) Int. Cl.: H04L 29/06, H04N 7/26, H04N 21/24

(54) **System and method for transmitting streaming media based on desktop sharing**

(30) Priority: 08.06.2011 TW 100119915
(71) Applicant: Hon Hai Precision Industry Co., Ltd., New Taipei City (TW)
(72) Inventor: Tsai, Cheng-Feng, Tu-Cheng, New Taipei (TW); Jeng, Shan-Chuan, Tu-Cheng, New Taipei (TW); Yen, Tsung-Hsin, Tu-Cheng, New Taipei (TW); Chien, Yu-Feng, Tu-Cheng, New Taipei (TW); Lee, Chung-I, New Taipei City, Taiwan (TW); Yeh Chien-Fa, New Taipei City, Taiwan (TW)
(74) Representative: Gray, John James

(57) **Abstract**

A server communicates with at least one client. If the server wants to transmit streaming media to a client, the client sends a package to the server. The package indicates if the client can decode the streaming media. If the client can decode the streaming media, the server decodes the streaming media and outputs the decoded streaming media on a display of the server. The server sends the streaming media to the client. The client decodes the streaming media and outputs the decoded streaming media on a display of the client. If the client cannot decode the streaming media, the server obtains the streaming media on the desktop of the server and compresses the streaming media to a compressed file. The client receives the compressed file from the server, and decompresses the compressed file. The decompressed files are output on the display of the client.

## Description

### Field

Embodiments of the present disclosure relate to media files management systems and methods, and more particularly to a system and a method for transmitting streaming media based on desktop sharing.

### BackGround

If a client wants to share pictures from a server, the server obtains the pictures displayed on a desktop of the server, compresses the pictures, and sends the compressed pictures to the client. However, if the desktop of the server displays streaming media, the server cannot compress the streaming media in real time because the streaming media is a large quantity of data. On another hand, if the server has compressed the streaming media, decompressing the streaming media may cause a heavy burden to the client, thus the displaying of the streaming media on the client may be not smooth.

### Summary

According to one aspect of the disclosure, a server is provided. The server includes: a storage system; at least one processor; and one or more programs being stored in the storage system and executable by the at least one processor, the one or more programs comprising: an opening module operable to decode a streaming media, and output the decoded streaming media on a display of the server; a first sending module operable to send the streaming media to the client if the client is capable of decoding the streaming media; a first control module operable to control the client to decode the received streaming media, and output the decoded streaming media on a display of the client; a obtaining module operable to obtain the decoded streaming media corresponding to the client output on the display of the server, and compress the obtained streaming media to a compressed file if the client is not capable of decoding the streaming media; a second sending module operable to send the compressed file to the client; and the second control module operable to control the client to decompress the compressed file to decompressed files, and output the decompressed files on the display of the client.

According to another aspect of the disclosure, a computer-based method for transmitting streaming media is provided. The method includes: decoding a streaming media, and outputting the decoded streaming media on a display of a server; sending the streaming media to the client if the client is capable of decoding the streaming media; controlling the client to decoding the received streaming media, and outputting the decoded streaming media on a display of the client; obtaining the decoded streaming media output on the display of the server, and compressing the obtained streaming media to a compressed file if the client is not capable of decoding the streaming media; sending the compressed file to the client; and controlling the client to decompress the compressed file to decompressed files, and outputting the decompressed files on the display of the client.

According to a further aspect of the disclosure, a storage medium is provided. The storage medium has stored instructions that, when executed by a processor of a server, causes the processor to perform the file search method as described above. For example, the storage medium is a non-transitory storage medium.

### BRIEF DESCRIPTION OF THE DRAWINGS

Embodiments of the invention are described, by way of example only, with reference to the accompanying drawings, in which:
FIG. 1 is a block diagram of one embodiment of a server comprising a transmission system.
FIG. 2 is a block diagram of one embodiment of the function modules of the transmission system in FIG. 1.
FIG. 3 is a flowchart illustrating one embodiment of a method for transmitting streaming media based on desktop sharing.

### DETAILED DESCRIPTION

The application is illustrated by way of examples and not by way of limitation in the figures of the accompanying drawings in which like references indicate similar elements. It should be noted that references to "an" or "one" embodiment in this disclosure are not necessarily to the same embodiment, and such references mean at least one.

In general, the word "module", as used herein, refers to logic embodied in hardware or firmware, or to a collection of software instructions, written in a programming language, such as, Java, C, or assembly. One or more software instructions in the modules may be embedded in firmware, such as in an EPROM. The modules described herein may be implemented as either software and/or hardware modules and may be stored in any type of non-transitory computer-readable medium or other storage device. Some non-limiting examples of non-transitory computer-readable media may include CDs, DVDs, BLU-RAY, flash memory, and hard disk drives.

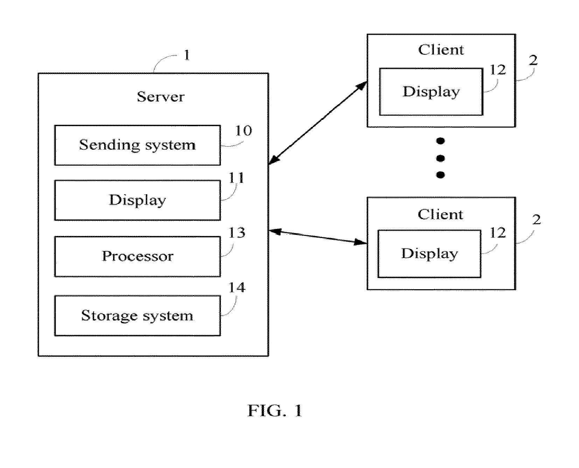

FIG. 1 is a block diagram of one embodiment of a server 1 comprising a transmission system 10. The server 1 electronically connects to at least one client 2. The transmission system 10 transmits streaming media displayed on a display 11 of the server 1 to the at least one client 2. The streaming media includes audio streams or video streams, for example. Each client 2 includes a display 12.

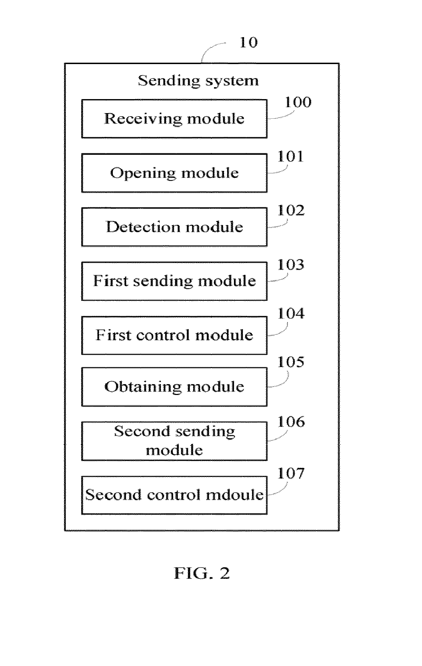

In an exemplary embodiment, the server 1 includes at least one processor 13 and a storage system 14. The sending system 10 may include one or more modules (as in FIG. 2). The one or more modules may comprise computerized code in the form of one or more software programs that are stored in the storage system 14 (or memory). In one embodiment, the storage system 14 may be a magnetic or an optical storage system, such as a flash memory, or other suitable storage medium. The computerized code includes instructions that are executed by the at least one processor 13 to provide functions for the one or more modules described below.

As shown in FIG. 2, the sending system 10 may include a receiving module 100, an opening module 101, a detection module 102, a first sending module 103, a first control module 104, a obtaining module 105, a second sending module 106, and a second control module 107. The receiving module 100 receives a data package from a client 2 if the server 1 sends a transmission request of transmitting streaming media to the client 2 or the client 2 sends a receiving request of receiving streaming media to the server 1. The data package includes information in relation to decoding capability and one or more decoding types of the streaming media. The decoding capability denotes if the client 2 is capable of decoding the streaming media. The one or more decoding types may include types of mp3, mp4, mkv, avi, for example. If the client is not capable of decoding the streaming media, the decoding type is a value of "null."

The opening module 101 opens the streaming media to be transmitted, decodes the streaming media and displays the decoded streaming media on a desktop of the display 11 of the server 1. For example, the opening module 101 plays a movie on the desktop of the display 11.

The detection module 102 detects if the client 2 is capable of decoding the streaming media according to the data package. In some embodiments, the detection module 102 checks the decoding capability and the one or more decoding types of the client 2. If the decoding capability of the client 2 indicates that the client 2 can decode the streaming media, the detection module 102 detects if the one or more decoding types of the client 2 includes a type of the streaming media. For example, if the decoding types of the client 2 include types of mp3 and avi, and the type of the streaming media is avi, the detection module 102 determines that the client 2 is capable of decoding the streaming media.

If the client is capable of decoding the streaming media, the first sending module 103 transmits the streaming media to the client 2.

The first control module 104 controls the client 2 to decode the streaming media and to display the decoded streaming media on the display 12 of the client 2. If the streaming media is a video stream, the client 2 decodes the video stream and displays the decoded video stream on the display 12 of the client 2.

If the client does not have the capability of decoding the streaming media, the obtaining module 105 obtains the streaming media corresponding to the client 2 output on the display 11 of the server 1, and compresses the obtained streaming media to a compressed file. In one embodiment, the display 11 of the server 1 may output more than one streaming media corresponding to each client 2. The second sending module 106 sends the compressed file to the client 2. The second control module 107 controls the client 2 to decompress the compressed file to decompressed files and outputs the streaming media from the decompressed files on the display 12 of the client 2.

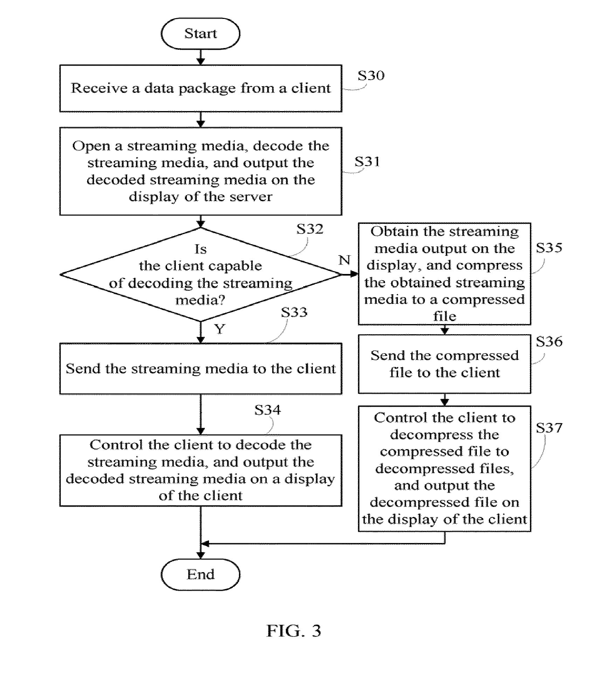

FIG. 3 is a flowchart illustrating a method for sending streaming media based on desktop sharing. Depending on the embodiment, additional blocks may be added, others removed, and the ordering of the blocks may be changed.

In block S30, the receiving module 100 receives a data package from a client 2. The data package includes a decoding capability of streaming media and a decoding type of streaming media.

In block S31, the opening module 101 opens the streaming media to be transmitted, decodes the streaming media, and outputs the decoded streaming media on the display 11 of the server 1.

In block S32, the detection module 102 detects if the client 2 is capable of decoding the streaming media according to the received data package. If the client 2 is capable of decoding the streaming media, block S33 is implemented. If the client 2 is not capable of decoding the streaming media, block S35 is implemented.

In block S33, the first sending module 103 sends the streaming media to the client 2.

In block S34, the first control module 104 controls the client 2 to decode the streaming media, and outputs the decoded streaming media on the display 12 of the client 2.

In block S35, the obtaining module 105 obtains the streaming media corresponding to the client 2 output on the display 11 of the server 1, and compresses the obtained streaming media to a compressed file.

In block S36, the second sending module 106 sends the compressed file to the client 2.

In block S37, the second control module 107 controls the client 2 to decompress the compressed file to decompressed files, and outputs the streaming media from the decompressed file on the display 12 of the client 2.

It should be emphasized that the above-described embodiments of the present disclosure, particularly, any embodiments, are merely possible examples of implementations, merely set forth for a clear understanding of the principles of the disclosure. Many variations and modifications may be made to the above-described embodiment(s) of the disclosure without departing substantially from the spirit and principles of the disclosure. All such modifications and variations are intended to be included herein within the scope of this disclosure and the present disclosure and protected by the following claims.

## Claims

1. A server, comprising:
a storage system;
at least one processor; and
one or more programs being stored in the storage system and executable by the at least one processor, the one or more programs comprising:
an opening module operable to decode a streaming media, and output the decoded streaming media on a display of the server;
a first sending module operable to send the streaming media to the client if the client is capable of decoding the streaming media;
a first control module operable to control the client to decode the received streaming media, and output the decoded streaming media on a display of the client;
a obtaining module operable to obtain the decoded streaming media corresponding to the client output on the display of the server, and compress the obtained streaming media to a compressed file if the client is not capable of decoding the streaming media;
a second sending module operable to send the compressed file to the client; and
the second control module operable to control the client to decompress the compressed file to decompressed files, and output the decompressed files on the display of the client.

2. The server as described in claim 1, wherein the one or more programs further comprises: a receiving module that is operable to receive a data package sent from the client.

3. The server as described in claim 2, wherein the data package comprises information in relation to decoding capability of the streaming media and one or more decoding types of the streaming media.

4. A computer-based method for transmitting streaming media, comprising:
decoding a streaming media, and outputting the decoded streaming media on a display of a server;
sending the streaming media to the client if the client is capable of decoding the streaming media;
controlling the client to decoding the received streaming media, and outputting the decoded streaming media on a display of the client;
obtaining the decoded streaming media output on the display of the server, and compressing the obtained streaming media to a compressed file if the client is not capable of decoding the streaming media;
sending the compressed file to the client; and
controlling the client to decompress the compressed file to decompressed files, and outputting the decompressed files on the display of the client.

5. The method as described in claim 4, before opening step further comprises:
receiving a data package sent from the client.

6. The method as described in claim 5, wherein the data package comprises information in relation to decoding capability of the streaming media and one or more decoding types of the streaming media.

7. A non-transitory storage medium having stored thereon instructions that, when executed by a processor, cause the processor to perform a method for transmitting streaming media, the method comprising:
decoding a streaming media, and outputting the decoded streaming media on a display of a server;
sending the streaming media to the client if the client is capable of decoding the streaming media;
controlling the client to decoding the received streaming media, and outputting the decoded streaming media on a display of the client;
obtaining the decoded streaming media output on the display of the server, and compressing the obtained streaming media to a compressed file if the client is not capable of decoding the streaming media;
sending the compressed file to the client; and
controlling the client to decompress the compressed file to decompressed files, and outputting the decompressed files on the display of the client.

8. The non-transitory storage medium as described in claim 7, before opening step further comprises: receiving a data package sent from the client.

9. The non-transitory storage medium as described in claim 8, wherein the data package comprises information in relation to decoding capability of the streaming media and one or more decoding types of the streaming media.
